Europäisches Patentamt

European Patent Office

Office européen des brevets

(19)

(11) Numéro de publication : **0 006 673**
**B1**

(12) **FASCICULE DE BREVET EUROPÉEN**

(45) Date de publication du fascicule du brevet :
29.07.81

(21) Numéro de dépôt : 79200346.9

(22) Date de dépôt : 26.06.79

(51) Int. Cl.³ : **B 60 C 25/06**

(54) **Mécanisme pour le réglage de la position du bras porte-outil d'un dispositif pour monter et démonter un pneu sur une jante de roue.**

(30) Priorité : 27.06.78 BE 257098

(43) Date de publication de la demande :
09.01.80 (Bulletin 80/01)

(45) Mention de la délivrance du brevet :
29.07.81 Bulletin 81/30

(84) Etats contractants désignés :
CH DE FR GB IT NL SE

(56) Documents cités :
DE - A - 1 605 652
FR - A - 2 383 796

(73) Titulaire : **Du Quesne, Francis**
**Cleistraat 138**
**B-2630 Aartselaar (BE)**

(72) Inventeur : **Du Quesne, Francis**
**Cleistraat 138**
**B-2630 Aartselaar (BE)**

(74) Mandataire : **Ottelohe, Jozef René**
**Bureau Ottelohe J.R. Postbus 3 Fruithoflaan 105**
**B-2600 Antwerpen (Berchem) (BE)**

Imprimerie Jouve, 17, rue du Louvre, 75001 Paris, France

« Mécanisme pour le réglage de la position du bras porte-outil d'un dispositif pour monter et démonter un pneu sur une jante de roue »

L'invention se rapporte à un mécanisme pour le réglage de la position du bras porte-outil d'un dispositif pour monter et démonter un pneu sur une jante de roue, dispositif qui comporte un plateau rotatif horizontal avec griffes pouvant se déplacer en vue de serrer la roue, une colonne verticale fixe sur laquelle est prévu un bras pouvant pivoter dans un plan horizontal au-dessus du plateau précité et une barre qui peut être réglée en hauteur dans ledit bras et qui porte à son extrémité inférieure une roulette de guidage pour écarter le talon du pneu par dessus la jante de roue et une roulette de pression pour enfoncer le talon du pneu dans la gorge de la jante sur la circonférence toute entière de la roue.

Un dispositif semblabe pour monter et démonter un pneu sur une jante de roue est représenté dans un prospectus portant la référence No 9 621 889 09-75 de la société allemande Gebr. Hofmann KG de Darmstadt. Ce dispositif connu, comprend un support sur la colonne verticale fixe et une vis de réglage avec petit volant à main qui se visse dans ce support et dont l'extrémité libre presse contre le bras pivotant. Après que le bras ait été tourné jusqu'à ce que le flanc d'un élément de pression s'applique contre la jante de roue, on tourne la vis de réglage de manière à ce que le bras et donc l'élément de pression s'écarte et se trouve donc réglée à une faible distance de la jante de roue, ce qui a pour effet que lors du mouvement de rotation du plateau l'élément de pression ne puisse frotter contre la jante et endommager celle-ci.

Cette vis de réglage présente cependant un inconvénient du fait que l'on doit faire plusieurs tours au petit volant à main avant que la roulette de pression se place dans la position désirée. Le réglage de cet élément ne peut donc se faire rapidement.

Dans le dispositif pour monter et démonter un pneu selon la DE-A-1.605.652, une roulette de pression est maintenue à une distance de la jante de roue à l'aide d'une roulette de guidage supplémentaire. Cette roulette de guidage se loge dans un creux dans la roulette de pression, pivote autour d'un axe vertical monté sur la barre portant la roulette de pression et roule sur la jante de roue lors du montage ou du démontage du pneu. Non seulement la distance entre la roulette de pression et la jante de roue est toujours la même et il n'y a donc pas de réglage réel de la position de cette roulette de pression mais la nécessité d'une roue de pression creuse et d'une roue de guidage supplémentaire complique la construction du dispositif.

Dans le dispositif pour monter et démonter un pneu selon la FR-A-2 383 796 une roulette de pression est éloignée de la jante de roue par une légère inclinaison de la barre portant cette roulette. Cette inclinaison est causée par un excentrique qui fait cependant partie d'un mécanisme de blocage pouvant bloquer la barre par rapport au bras horizontal. Le dispositif selon cette demande française est en effet d'un tout autre type que celui auquel s'applique le mécanisme selon l'invention puisque son bras horizontal n'est pas pivotant mais axialement déplaçable par rapport à la colonne verticale fixe. La barre portant la roulette de pression coulisse dans un chariot composé de deux parties, ce chariot coulissant lui-même sur le bras horizontal. L'excentrique coopère avec deux goupilles sur une des parties du chariot et est solidaire d'une vis, traversant une ouverture ovale dans la partie susdite, et vissée dans l'autre partie du chariot.

L'action combinée de l'excentrique et la vis peut serrer les deux parties du chariot l'une contre l'autre et en même temps incliner légèrement la barre porte-outil par rapport au chariot. La distance entre la roulette de pression et la jante de pneu lors du montage ou du démontage du pneu est toujours la même et il n'y a donc pas de réglage proprement dit.

Le mécanisme de blocage causant accessoirement l'inclinaison de la barre porte-outil est d'une construction très compliquée. En plus, il est évident que ce mécanisme de blocage avec l'excentrique n'est pas applicable aux dispositifs du type auquel le mécanisme selon l'invention s'applique tout comme le mécanisme selon l'invention n'est d'ailleurs pas applicable au dispositif selon la demande de brevet française susdite.

En vue de remédier à ces inconvénients et d'obtenir dans les dispositifs à bras pivotant un réglage rapide et facile de la roulette de pression par rapport à la jante de roue sans mécanisme très compliqué, le mécanisme comprend selon la principale caractéristique de l'invention un excentrique entre la colonne et le bras pivotant.

A titre d'exemple et sans le moindre caractère limitatif, il est donné ci-après une description plus détaillée d'une forme d'exécution choisie du mécanisme conforme à l'invention. Cette description se réfère aux dessins annexés, dans lesquels :

La figure 1 représente une vue latérale de la partie supérieure d'un dispositif pour le montage d'un pneu pourvu d'un mécanisme selon l'invention.

la figure 2 en représente une vue en plan ;

la figure 3 représente une vue latérale agrandie avec coupe partielle de la partie pivotante du bras qui porte les outils ;

la figure 4 représente une coupe suivant la ligne IV-IV de la figure 3.

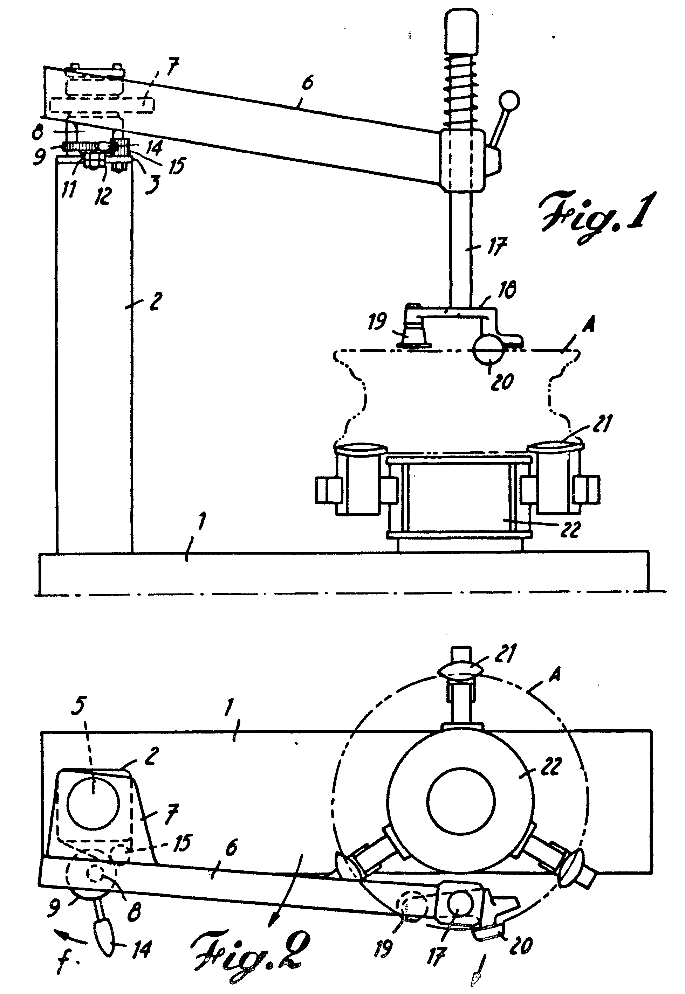

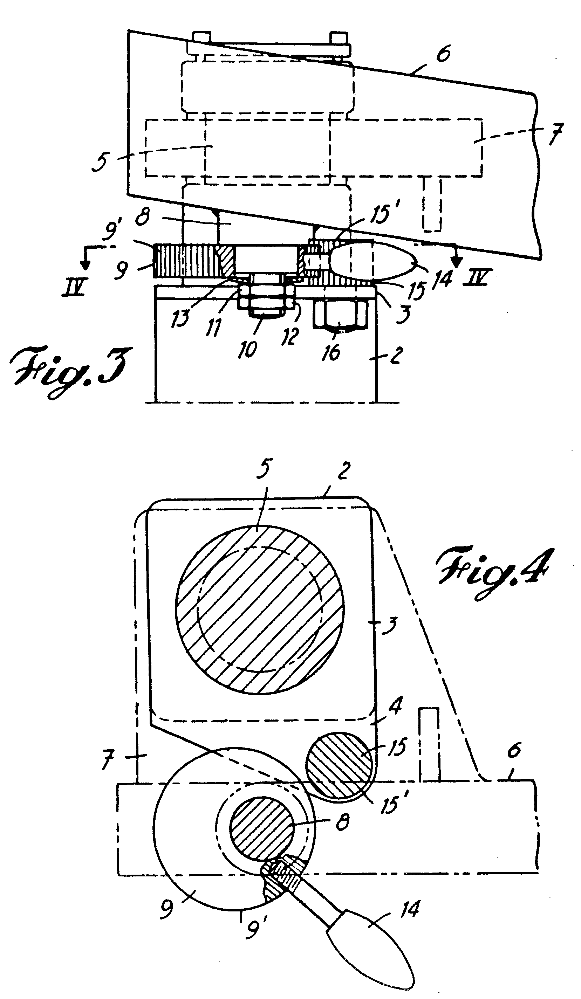

Sur le bâti 1 se trouve montée une colonne verticale fixe 2 dont le dessus est recouvert d'une plaque 3 avec une partie saillante 4. Sur cette plaque se trouve monté un axe 5 autour duquel peut pivoter un bras porte-outil 6 qui se trouve attaché à une aile 7. Fixé sous ce bras 6 il est prévu un axe 8 sur lequel est monté un excentrique 9, de manière à pouvoir tourner. L'extrémité libre de cet axe 8 est pourvue d'un téton fileté 10 sur lequel se vissent un écrou 11 et un contre-écrou 12. Entre l'excentrique 9 et l'écrou 11 il est encore prévu une rondelle ressort 13. Par suite de ces éléments, la pression sur l'excentrique 9 est réglable. Une poignée 14 fait partie intégrante de l'excentrique 9 et permet de faire tourner celui-ci autour de l'axe 8. L'excentrique 9 coopère avec une butée cylindrique 15 solidaire de la partie saillante 4 de la plaque 3 au moyen d'un écrou 16. Pour rendre cette coopération efficace et éviter la rotation non voulue de l'excentrique, les surfaces coopérantes 9' et 15' de l'excentrique 9 et de la butée 15 sont rainurées verticalement. A l'avant le bras pivotant 6 porte de manière bien connue la barre 17, qui est réglable en hauteur, avec un support 18 qui porte la roulette de guidage 19 pour écarter le talon du pneu et la roulette de pression 20 qui enfonce le pneu dans la gorge de la roue A au cours du montage du pneu. La roue A est maintenue de la manière bien connue entre les griffes 21 d'un plateau 22, qui est entraîné en rotation.

Pour le montage d'un pneu celui-ci est placé en oblique par dessus la roue A de manière que le talon du pneu se trouve déjà en partie dans la gorge de la jante de roue. Ensuite le bras 6 est pivoté vers la roue et l'on règle la hauteur de la barre 17 jusqu'à ce que la roulette de guidage 19 repose sur la roue A et que le flanc de la roulette de pression 20 touche le bord de la jante de roue, de sorte que le flanc du pneu passe sous la roulette de pression 20 et que le talon du pneu passe le long de la circonférence de la roulette de guidage 19. Lorsque maintenant la poignée 14 de l'excentrique 9 est tournée dans la direction f, l'excentrique 9 presse contre la butée 15 et déplace immédiatement et sans effort le bras 6 d'une faible distance, ce qui a pour effet de placer la roulette de pression 20 à une faible distance de la jante de roue, de manière à éviter tout contact avec celle-ci. Lorsque le plateau 22 avec la roue A est entraîné en rotation, le pneu est pressé par dessus la jante de roue sur l'entièreté de la circonférence de celle-ci, sans qu'elle ne puisse être endommagée par la roulette de pression 20.

Pour le montage de l'autre talon du pneu on procède de la même manière. Le même avantage est obtenu lors du démontage du pneu.

**Revendications**

1. Mécanisme pour le réglage de la position du bras porte-outil (6) d'un dispositif pour monter et démonter un pneu sur une jante de roue (A), dispositif qui comporte un plateau rotatif horizontal (22) avec griffes (21) pouvant se déplacer en vue de serrer la roue (A), une colonne verticale fixe (2) sur laquelle est prévu le bras (6) pouvant pivoter dans un plan horizontal au-dessus du plateau (22) précité et une barre (17) qui peut être réglée en hauteur dans ledit bras (6) et qui porte à son extrémité inférieure une roulette de guidage (19) pour écarter le talon du pneu par dessus la jante de roue (A) et une roulette de pression (20) pour enfoncer le talon du pneu dans la gorge de la jante sur la circonférence toute entière de la roue (A), caractérisé par le fait qu'il comprend, entre la colonne verticale fixe (2) et le bras pivotant (6), un excentrique (9) pour le déplacement du bras (6) et le réglage de la roulette de pression (20) à une faible distance par rapport à la jante de roue.

2. Mécanisme selon la revendication 1, caractérisé par le fait qu'il comprend un axe (8) qui est monté sur le bras pivotant (6), l'excentrique (9) avec poignée (14) étant monté, de manière rotative, autour de cet axe et qu'il comprend une butée (15), montée sur la colonne verticale fixe (2), butée (15) contre laquelle s'applique l'excentrique (9) en vue de déplacer le bras pivotant (6) et de placer la roulette de pression (20) à une faible distance de la jante de roue (A).

3. Mécanisme selon la revendication 2, caractérisé par le fait que la butée (15) montée sur la colonne (2) est de forme cylindrique.

4. Mécanisme selon la revendication 2, caractérisé par le fait que l'extrémité libre (10) de l'axe (8) de l'excentrique (9) est pourvue d'un filetage sur lequel sont vissés un écrou (11) et un contre-écrou (12) et qu'il est prévu entre l'écrou (11) et l'excentrique (9) une rondelle ressort (13).

5. Mécanisme selon la revendication 2, caractérisé par le fait que les surfaces coopérantes (9', 15') de l'excentrique (9) et de la butée (15) sont rainurées verticalement.

**Claims**

1. Mechanism for adjusting the position of the tool carrier arm (6) of a device for fitting and removing a tire on and from a wheel rim (A), device which comprises a horizontal rotary table (22) with jaws (21) which can be moved so as to grip the wheel (A), a fixed vertical column (2) which is provided with the arm (6) which can swivel in a horizontal plane above the aforesaid rotary table (22) and a rod (17) which can be ajusted in height in aforesaid arm (6) and which carries at its lower end a guide roller (19) for spreading the bead of the tire over the rim (A), as well as a pressure roller (20) for entering the bead of the tire into the groove of the rim along the entire circumference of the wheel (A), characterized by the fact that it comprises, between the fixed vertical column (2) and the swivelling arm (6), an excentric (9) for moving aforesaid arm (6) and for adjusting the préssure roller (20) to a small distance with respect to the wheel rim.

2. Mechanism according to claim 1, characterized by the fact that it comprises a shaft (8) which is fitted on swivelling arm (6), the excentric (9) with handle (14) being fitted, so as to be able to rotate, around aforesaid shaft and being provided with a stop (15), which is fitted on the fixed vertical column (2), the excentric (9) engaging this stop (15) so as to move the swivelling arm (6) and to bring the pressure roller (20) to within a slight distance of the wheel rim (A).

3. Mechanism according to claim 2, characterized by the fact that the stop (15) which is fitted to the column (2) has a cylindrical shape.

4. Mechanism according to claim 2, characterized by the fact that the free end (10) of the shaft (8) of the excentric (9) is threaded and is fitted with a nut (11) and with a lock nut (12) and that a spring washer (13) is provided between aforesaid nut (11) and the excentric (9).

5. Mechanism according to claim 2, characterized by the fact that the cooperating surfaces (9', 15') of the excentric (9) and of the stop (15) are provided with vertical grooves.

**Ansprüche**

1. Regelmechanismus für das Einstellen der Lage des Werkzeugtragarmes (6) einer Reifenmontier- und Reifenendemontiervorrichtung, welche aus einer Horizontaldrehscheibe (22) mit verschiebbaren Klauen (21) für das Festklemmen des betreffenden Rades (A), sowie aus einer festen Vertikalsäule (2) mit dem in einer Horizontalebene über der vorgenannten Scheibe (22) schwenkbaren Tragarm (6) und mit einem in diesem Arm höhenverstellbaren Stab (17) besteht, wobei dieser Stab (17) an seinem unteren Ende eine Führungsrolle (19) zwecks Entfernung des Reifenwulstes über die Radfelge und eine Druckrolle (20) für das Hineindrücken des Reifenwulstes in die Felgennute über den Gesamtumfang des Rades (A) trägt, dadurch gekennzeichnet, dass er zwischen der vorgenannten festen Vertikalsäule (2) und dem vorgenannten Schwenkarm (6) einem Exzenter (9) für das Schwenken des Armes (6) und die Einstellung der vorgenannten Druckrolle (20) in der unmittelbaren Nähe der Radfelge aufweist.

2. Mechanismus gemäss dem Anspruch 1, dadurch gekennzeichnet, dass er mit einer auf dem vorgenannten Schwenkarm (6) angeordneten Welle (8) versehen ist, wobei der vorgenannte Exzenter (9) mit Handgriff (14) schwenkbar um diese Welle angeordnet ist, und einen an der vorgenannten festen Vertikalsäule (2) befestigten Anschlag (15) aufweist, gegen dem der Exzenter (9) sich während des Antriebs des Schwenkarmes (6) und der Anordnung der Druckrolle (20) in der unmittelbaren Nähe der Radfelge abstützt.

3. Mechanismus gemäss dem Anspruch 2, dadurch gekennzeichnet, dass der vorgenannte, an der Säule (2) befestigte Anschlag (15) zylinderförmig ist.

4. Mechanismus gemäss dem Anspruch 2, dadurch gekennzeichnet, dass das freie Ende (10) der Welle (8) des Exzenters (9) mit Aussengewinde versehen ist, worauf eine Mutter (11) und eine Gegenmutter (12) geschraubt sind, zwischen denen ein Federring (13) angeordnet ist.

5. Mechanismus gemäss dem Anspruch 2, dadurch gekennzeichnet, dass die miteinander zusammenwirkenden Flächen (9', 15') des Exzenters (9) und des Anschlags (15) vertikalgerillt sind.

Fig.1

Fig.2

Fig.3

Fig.4